# EUROPEAN PATENT SPECIFICATION

(11) **EP 0 509 506 B1**
(45) Date of publication and mention of the grant of the patent: **25.06.1997**
(21) Application number: 92106623.9
(22) Date of filing: 16.04.1992
(51) Int. Cl.: C07F 9/12, C08K 5/523

(54) **Crystalline powders of aromatic diphosphates, their preparation and use**
Kristalline Pulver von aromatischen Diphosphaten, ihre Herstellung und Verwendung
Poudres cristallines de diphosphates aromatiques, leur préparation et utilisation

(30) Priority: 16.04.1991 JP 84188/91; 23.08.1991 JP 211193/91
(43) Date of publication of application: 21.10.1992
(73) Proprietor: DAIHACHI CHEMICAL INDUSTRY CO., LTD., Higashiosaka-shi, Osaka (JP)
(72) Inventor: Matsumura, Tadanori, Higashiosaka-shi, Osaka (JP); Tanaka, Yoshinori, Habikino-shi, Osaka (JP)
(74) Representative: Kraus, Walter, Dr.

(56) References cited:
- CA-A- 2 034 403
- FR-A- 2 338 284
- JOURNAL OF POLYMER SCIENCE, POLYMER PHYSICS EDITION vol. 27, no. 10, 1989, NEW YORK US pages 1979 - 1992 R.P. KAMBOUR 'Modulus and Yield Resistance of Glassy Blends Containing Diluents Manifesting Varying Degrees of Mobility:
- Polyphenylene Ether/Polystyrene/Diluent Mixtures'
- CHEMICAL ABSTRACTS, vol. 116, no. 12, 23 March 1992, Columbus, Ohio, US; abstract no. 107929, page 79 ;

## Description

### BACKGROUND OF THE INVENTION

### 1. Field of the Invention

The present invention relates to crystalline powders of an aromatic diphosphate and their preparation and use. The aromatic diphosphates are powders of high purity, can improve thermoplastic or thermosetting resins in their flame retardance, thermal stability and moldability and hence are useful as a flame-retardant, antioxidant and plasticizer.

### 2. Description of the Related Art

In order to impart flame retardance to a thermoplastic or thermosetting resin, a flame-retardant has been added to the resin at a molding process thereof.

Conventional flame-retardants are inorganic compounds, organophosphorus compounds, organohalogen compounds, halogen-containing organophosphorus compounds and the like. Among the above compounds, organohalogen compounds and halogen-containing organophosphorus compounds show a superior flame retardant effect. However, such halogen-containing compounds are pyrolyzed at a molding process of the resin added with the same, thereby generating a hydrogen halide which corrodes a mold used and deteriorates the resin with its color possibly changed. Further, the resultant halide makes a working environment bad. Another problem associated with the compounds is that they generate a toxic gas, e.g., hydrogen halide, which is harmful to human beings, in case of burning caused by a fire, etc.

Halogen-free flame-retardants are inorganic compounds such as magnesium hydroxide and the like. Such inorganic compounds, however, show so little a flame retardant effect that they have to be added in a large amount to obtain a satisfactory result. This leads to degradation of physical properties of the resin itself.

Organophosphorus compounds are widely used as a halogen-free flame-retardant showing a relatively good flame retardant effect. Although triphenyl phosphate (TPP) is well known as a typical organophosphorus compound, it suffers from less heat resistance and rather high volatility.

The organophosphorus compounds showing a relatively low volatility include polyphosphoric esters as disclosed in Japanese Patent Publication Nos. 19858/1976 and 18336/1990. Although these compounds show good heat resistance compared to triphenyl phosphate, they cannot be proof against higher temperature of around 300 °C which is required to mold recently developed high-performance plastics such as engineering plastics or super-engineering plastics. Further, polyphosphoric esters are liquid, and hence lower physical properties of the resin, for example, a thermal deformation temperature.

Flame-retardants showing low volatility as well as heat resistance are organic phosphates having an aromatic group bonded with a steric hindrance group at ortho position thereof, as disclosed in U.S. Patent No. 4,134,876. The above organic phosphates are represented by of the following formula:

M₂PO₄[D-PO₄-(M)]ₙM

wherein M is a residue of a monohydric phenol; D is a residue of a dihydroxy phenol; and n is an average value from 1 to 5. All of the organophosphates disclosed in Examples thereof however are mixtures of organic phosphates wherein n is 1 or more. Such mixtures are colored resinous solids, and hence lack moldability when added to a resin.

Journal of Polymer Science: Part B: Polymer Physics, Vol. 27, 1979-1992 (1989) relates to a liquid tetraxylyl hydroquinone diphosphate which is prevented from crystallization by the content of a large amount of bi-products. This tetraxylyl hydroquinone diphosphate is therefore not suited to improve thermoplastic or thermosetting resins in their flame-retardance, thermal stability and moldability. It cannot advantageously be used as a flame-retardant, antioxidant and plasticizer.

### SUMMARY OF THE INVENTION

The present invention provides an organic diphosphate of the formula (I): 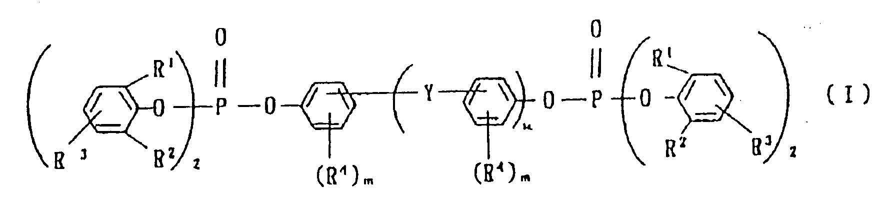 wherein R¹ and R² are, the same or different, a lower alkyl group, R³ is a hydrogen atom or a lower alkyl group, R⁴ is a hydrogen atom or a lower alkyl group, Y is a bonding arm, -CH₂-, -C(CH₃)₂-, -S-, -SO₂-, -CO-, -O- or -N=N-, k is 0 or 1 and m is an integer from 0 to 4, in the form of a crystalline powder.

The organic diphosphate (I) can be prepared by reacting an aromatic monohydroxy compound having a group for giving steric hindrance at the ortho position of the formula (II): 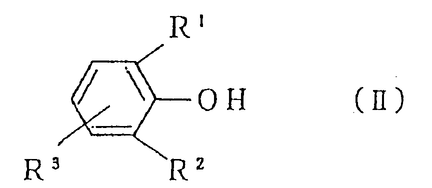 wherein R¹, R² and R³ have the same meanings as above, with a phosphorus oxyhalide in the presence of a Lewis acid catalyst to obtain a diarylphosphoro halidate of the formula (III): 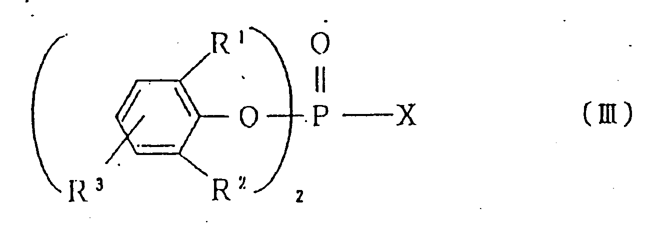 wherein R¹, R² and R³ have the same meanings as above, and X is a halogen,
and reacting the resultant (III) with an aromatic dihydroxy compound of the formula (IV): 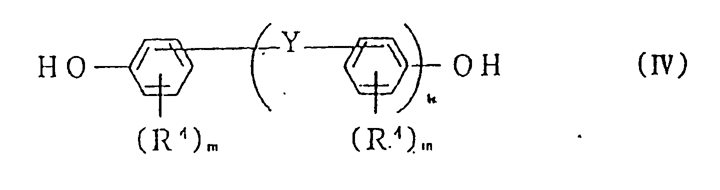 wherein R⁴, Y, k and m have the same meanings as above in the presence of a Lewis acid catalyst.

The present invention also provides a flame retardant and thermally stable composition comprising crystalline powders of the formula (I) and a thermoplastic or thermosetting resin.

### BRIEF DESCRIPTION OF THE DRAWINGS

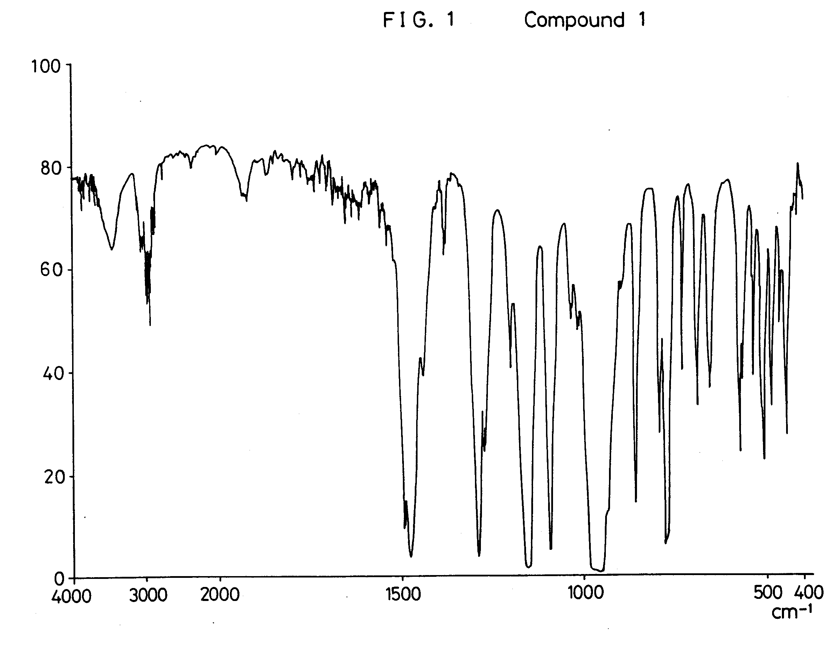

Figures 1, 2 and 3 show the infrared absorption spectra of Compounds 1, 2 and 3 as obtained by the enbodiments of the present invention, respectively.

### DETAILED DESCRIPTION OF THE PREFERRED EMBODIMENTS

The method for preparing an organic diphosphate (I) according to the present invention is shown in the following schemes:

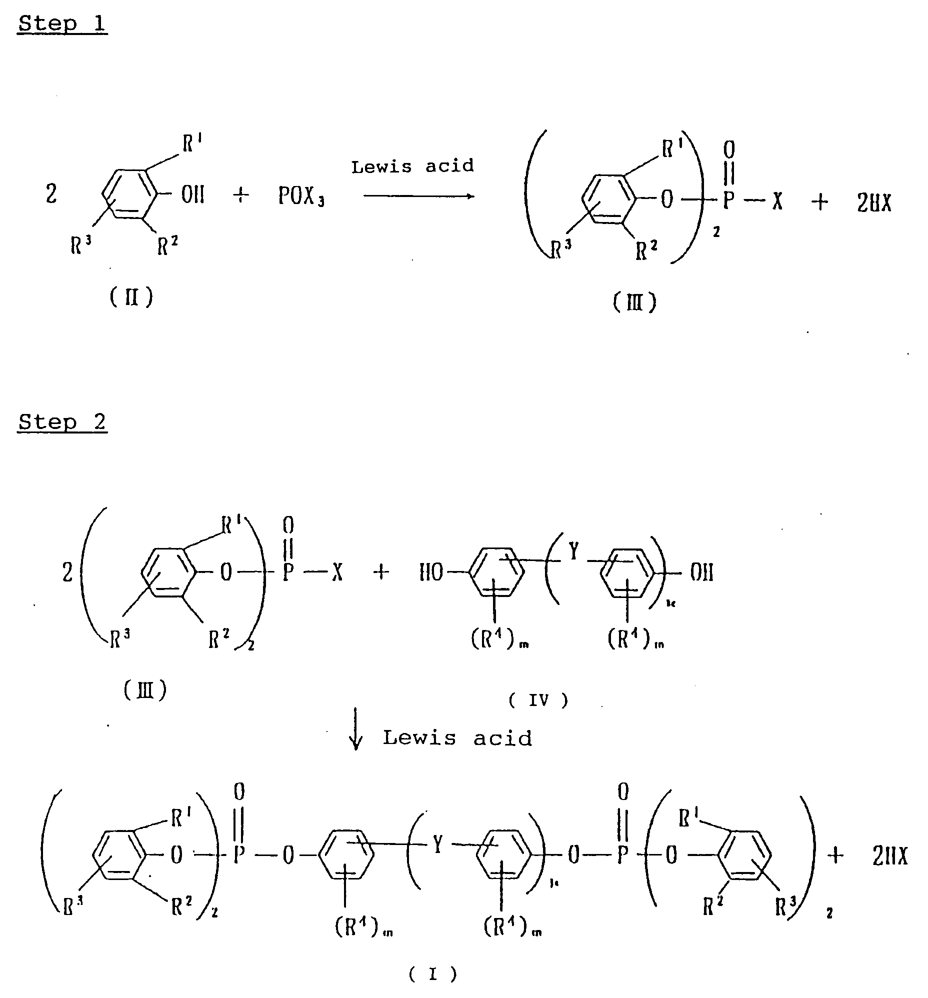

The term "a lower alkyl group" used for the symbols R¹, R², R³ and R⁴ in the above formulae means a straight or branched chain C₁₋₅ alkyl group. Examples of the groups include methyl, ethyl, propyl, isopropyl, n-butyl, isobutyl, tert-butyl, n-pentyl, isopentyl, tert-pentyl, neopentyl and the like, among which methyl is preferable.

Examples of the aromatic monohydroxy compounds (II) used in Step 1 include 2,6-xylenol, 2,4,6-trimethylphenol and the like, among which 2,6-xylenol is preferable. Examples of the phosphorus oxyhalides include phosphorus oxychloride, phosphorus oxybromide, among which phosphorus oxychloride is preferable.

Examples of the aromatic dihydroxy compounds (IV) used in Step 2 include hydroquinone, resorcinol, pyrocatechol, 4,4'-biphenol, 2,2',6,6'-tetramethyl-4,4'-biphenol, bisphenol A, bisphenol S and bisphenol F and the like, among which hydroquinone, resorcin or 4,4'-biphenol is preferable.

Examples of the Lewis acid catalysts used in Step 1 include aluminum chloride, magnesium chloride, titanium tetrachloride, antimony pentachloride, zinc chloride, tin chloride and the like, among which magnesium chloride is particularly preferable. A mixture of two or more of these catalysts may be used.

In Step 2, the catalyst can be utilized as it is in Step 1 but be further added. Preferred catalyst in Step 2 is aluminum chloride. Also, an amine such as trimethylamine or tributylamine may be used in Step 2.

The phosphourus oxyhalide such as POCl₃, POBr₃ or the like is used in a ratio of at least 0.5 mol equivalent amount with respect to the compound (II). Usually, 1 - 1.2 mol of phosphorus oxyhalide is used per 1 mol of the compound (II). When phosphorus oxyhalide is used in an excess amount, it will give by-product of diarylphosphoro halidate produced which then causes to yield a higher polymerization product at Step 2. On the contrary, if the phosphorus oxyhalide is insufficient, the ratio of the triarylphosphate (by-product) is raised. Anyway, the purity of the objective compound is lowered.

The compound (IV) is used in a ratio of 0.5 mol equivalent amount with respect to the compound (III).

The amount of the catalyst used in Step 1 is more than 0.1 wt. % with respect to the phosphorus oxyhalide, preferably in the range between 0.5 - 2.0 wt. %.

The amount of the catalyst used in Step 2 is more than 0.1 wt. % with respect to the phosphorus oxyhalide used in Step 1, preferably in the range between 0.5 - 5.0 wt. %.

The reaction temperature in Steps 1 and 2 is 50 - 250 °C, preferably 100 - 200 °C. Pressure in the reaction system may be reduced so as to remove hydrogen halide produced in the reaction, thereby accelerating the reaction.

Though a solvent need not necessarily be used in Step 1, it may optionally be used. Examples of the solvents include xylene, toluene, chlorobenzene, dichlorobenzene and the like.

In Step 1, the purity of the product is usually more than 99 %, and hence the product can be used in Step 2 without purification.

After Step 2 is completed, impurities in the product, e.g., catalysts are washed and removed by a conventional method. For example, the product is contacted with an acid solution, for example, hydrochloric acid solution so that impurities are extracted into the aqueous solution. At that time, an organic solvent may be added to the solution for preventing the aromatic diphosphate from becoming solid and for serving as a crystallizing solvent later. The organic solvent preferably dissolves the aromatic diphosphate well at a high temperature while dissolving less at a low temperature. Such a solvent includes toluene, xylene, chlorobenzene, dichlorobenzene or the like, which is in no way limitative to this invention and may be used as a mixture thereof. The temperature for the contact of the product with the acid solution as stated above is from room temperature up to near the boiling point of the solution. The amount of the organic solvent used is not particularly limited so long as the aromatic diphosphate is not crystallized at the temperature for the contact.

The washed mixture may be cooled to precipitate crystals which then are separated by filtration. Alternatively, water content contained or dispersed in the solution may be removed to precipitate crystals which are then separated. The resultant crystals are dried and used without purification, or are washed with a solvent such as water, methanol or ethanol which can hardly dissolve the aromatic diphosphate and dried for use.

The aromatic diphosphate prepared according to the present invention is effective for a thermoplastic resin (except polyester) or thermosetting resin as a flame-retardant, antioxidant and plasticizer, and therefore can endow the resin with flame retardance and thermal stability and improve the moldability of the resin. In addition, properties of the resin are less deteriorated.

Examples of the thermoplastic resins include chlorinated polyethylenes, polyethylenes, polypropylenes, polybutadienes, styrene resins, high-impact polystyrenes, polyvinyl chlorides, ACS resins, AS resins, ABS resins, modified polyphenylene oxides, polymethyl methacrylates, polyamides, polycarbonates, polyphenylene sulfides, polyimides, polyether-ether-ketones, polysulphones such as polyether sulphones, polyarylates, polyetherketones, polyether nitriles, polythioether sulfons, polybenzimidazoles, polycarbodiimides, polymer liquid crystals, composite plastics and the like. Examples of the thermosetting resins include polyurethanes, phenol resins, melamine formaldehyde resins, urea resins, unsaturated polyesters, diallyl phthalate resins and the like. One of the above-mentioned resins may be mixed with one or more of the others for use.

Flame retardant compositions of the present invention may contain various additives such as other kinds of flame-retardants, antioxidant, filler, lubricant or the like.

The kind and amount of the aromatic diphosphate to be used is dependent on the kind and amount of resin, and the flame-retardant required. The aromatic diphosphate is used usually in an amount of 0.1 to 100 parts by weight with respect to 100 parts by weight of the above resin. The aforesaid resin, aromatic diphosphate and any optional additives are mixed and molded by a known method to obtain a flame retardant molding product. The aromatic diphosphate is added, for example, together with a monomer which is to be charged to produce the above resin by bulk polymerization; in the end period of bulk polymerization or at molding process of the resin; or in the form of solution or fluid solution for applying to a surface of resin products such as film or filament.

In terms of workability in preparing the resin composition, a flame-retardant is preferably in a powder form retardant because of its mixing affinity with the resin. The aromatic diphosphates prepared according to the present invention are crystalline powders of high purity, more than 98 %. The aromatic diphosphate is superior in thermal stability and heat resistance against a high temperature at molding process while properly giving plasticity and hence a good processability even to engineering plastics or super-engineering plastics having a higher performance which require a high temperature to be molded, as stated above.

### EXAMPLES

### Example 1

2,6-Xylenol (244 g), xylene (20 g), magnesium chloride (1.5 g) were placed in a four-neck flask with a stirrer, a thermometer, a dropping funnel and a condenser connected to a water scrubber. The mixture was heated with stirring. When the temperature of the reaction mixture reached 120 °C, phosphorus oxychloride (153 g) was added by portions over about 2 hours. Hydrogen chloride gas, which was then generated, was led to the water scrubber. After phosphorus oxychloride was added, the temperature of the mixture was gradually raised up to 180 °C over 2 hours to complete the reaction. The yield of the resultant di-(2,6-xylyl)phosphoro chloridate was 99.7 %. The composition ratio and yield of organic phosphorus compounds in the product analyzed by gas chromatography are shown in Table 1. Table 1 also shows results of products obtained in Examples 2 to 4, and comparative examples 1 and 2 to be described below.

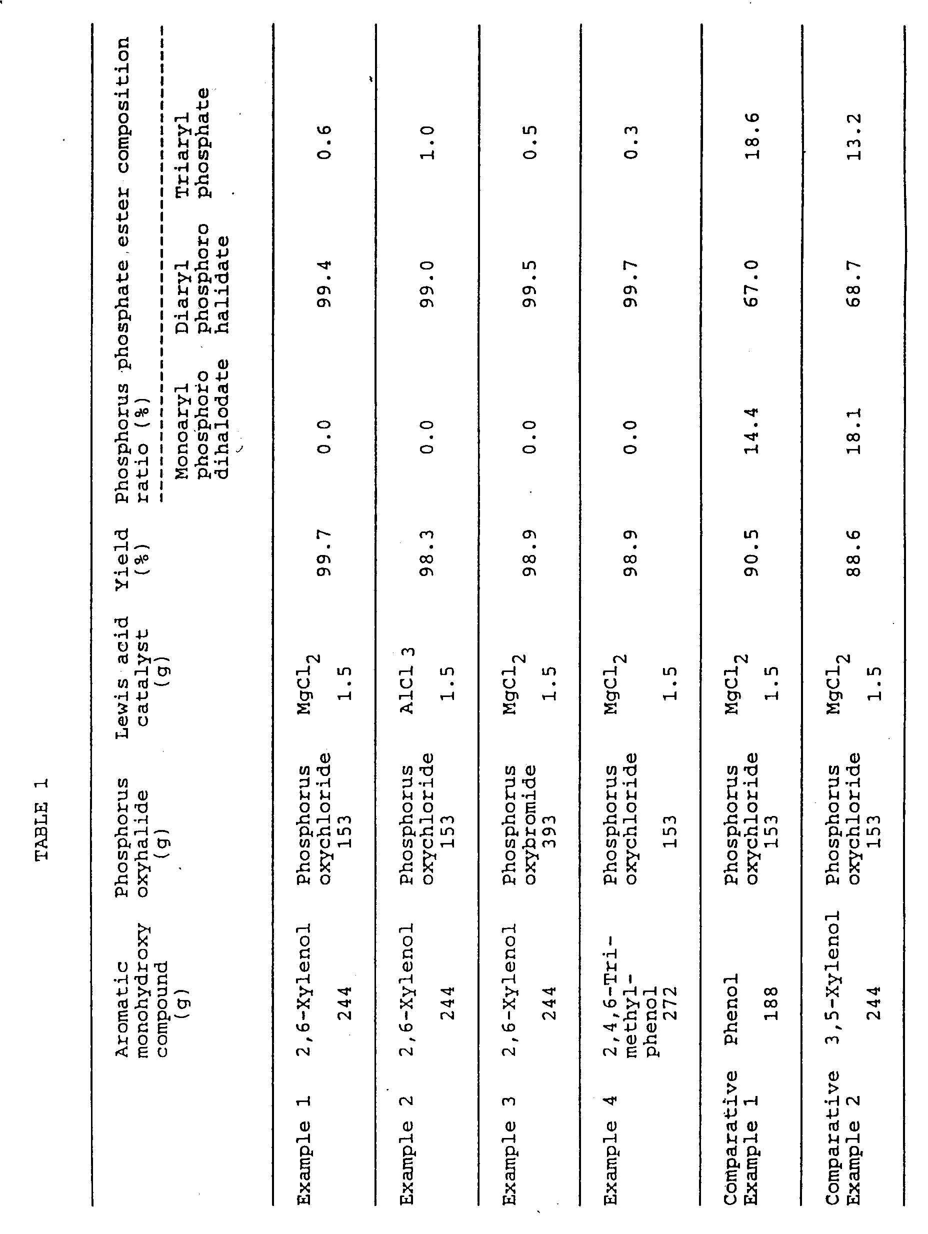

### Example 2

Di(2,6-xylyl)phosphoro chloridate was obtained in the same manner as Example 1, except using aluminum chloride instead of magnesium chloride.

### Example 3

Di(2,6-xylyl)phosphoro bromidate was obtained in the same manner as Example 1, except using phosphorus oxybromide (393 g) instead of phosphorus oxychloride (153 g).

### Example 4

Di(2,4,6-trimethylphenyl) phosphoro chloridate was obtained in the same manner as Example 1, except using 2,4,6-trimethylphenol (272 g) instead of 2,6-xylenol (244 g).

### Comparative example 1

Diphenyl phosphoro chloridate was obtained in the same manner as Example 1, except using phenol (188 g) instead of 2,6-xylenol (244 g).

### Comparative example 2

Di(3,5-xylyl) phosphoro chloridate was obtained in the same manner as Example 1, except using 3,5-xylenol instead of 2,6-xylenol.

In Examples 5 to 7, di(2,6-xylyl) phosphoro chloridate obtained in the manner of Example 1 was used.

### Example 5

Di(2,6-xylyl)phosphoro chloridate (345 g), hydroquinone (55 g), aluminum chloride (1.5 g) were placed in a four-neck flask with a stirrer, a thermometer and a condenser connected to a water scrubber. The mixture was heated and mixed with stirring. The reaction mixture was subjected to dehydrochlorination by raising a temperature thereof up to 180 °C over 2 hours. After matured at the same temperature for 2 hours, the mixture was further matured under a reduced pressure of 200 mmHg for more 2 hours to complete the reaction. Xylene (500 g) and 10 % hydrochloric acid solution (200 g) were added to the reaction mixture. The mixture was stirred, and residual catalyst was removed. Further, the reaction mixture was washed with water and cooled to room temperature with stirring to precipitate crystals. The resultant crystals were separated by filtration, washed with methanol (200 g) and dried at 100 °C under reduced pressure to give crystals, white crystalline powders (326 g, yield 95 %). Gel permeation chromatography revealed that the purity of the obtained crystals was 98.5 %. The crystalline product (this is hereinafter referred to as Compound 1) is represented by the following chemical formula: 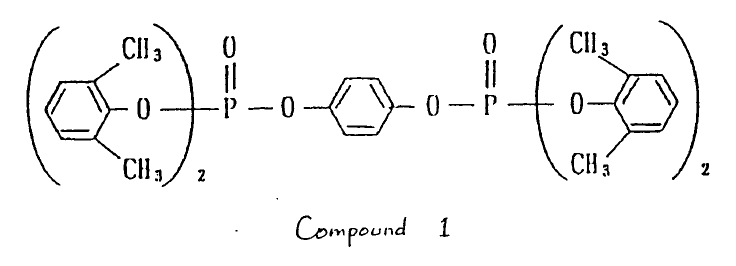 Melting point was 168 to 169 °C. Table 2 shows the physical properties (yield, purity and melting point) of the obtained crystalline product as well as those of the products of Examples 6 and 7. IR spectrum of this compound is shown in Fig. 1.
- NMR (CDCl₃) δ:: 2.52(24H,s), 7.51(12H,s), 7.435(4H,d,J=11Hz)

**TABLE 2**

| | Aromatic dihydroxy compound(g) | Bis(2,6-xylyl) phosphoro chloridate(g) | Yield | | Form | Melting Point (°C) | Purity (%) |
|---|---|---|---|---|---|---|---|
| | | | (g) | (%) | | | |
| Example 5 | Hydroquinone 55 | 345 | 326 | 95 | White Crystalline Powder | 168-169 | 98.5 |
| Example 6 | Resorcinol 55 | 345 | 330 | 96 | White Crystalline Powder | 95-96 | 99.0 |
| Example 7 | 4,4'-Biphenol 93 | 345 | 355 | 93 | White Crystalline Powder | 182-183 | 98.7 |

### Example 6

White powders of an aromatic diphosphate were obtained in the same manner as Example 4, except using resorcin instead of hydroquinone (this is hereinafter referred to as Compound 2). Compound 2 is represented by the following formula:

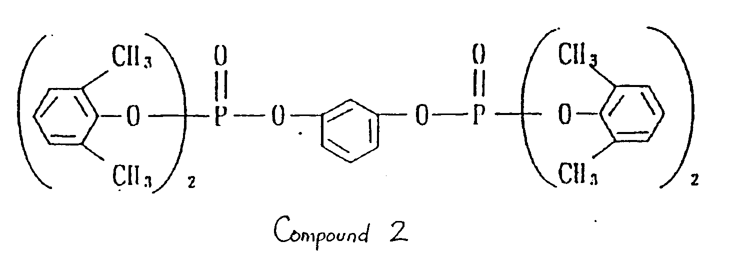

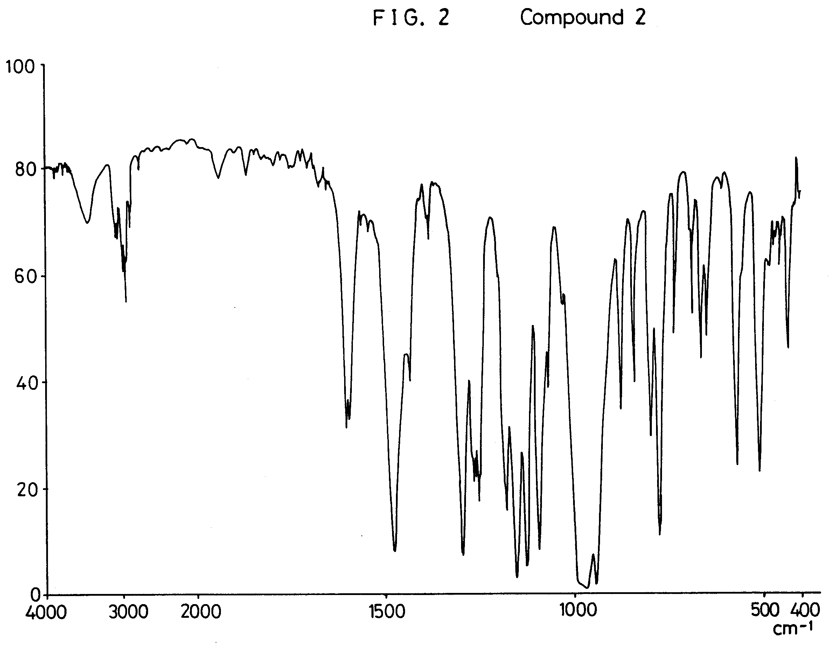

IR spectrum of this compound is shown in Fig. 2.
- NMR (CDCl₃) δ:: 2.27(24H,s), 6.98(12H,s), 7.23(4H,s)

### Example 7

White powders of an aromatic diphosphate (this is hereinafter referred to as Compound 3) were obtained in the same manner as Example 4, except using 4,4'-biphenol (93 g) instead of hydroquinone (55 g). Compound 3 is represented by the following formula:

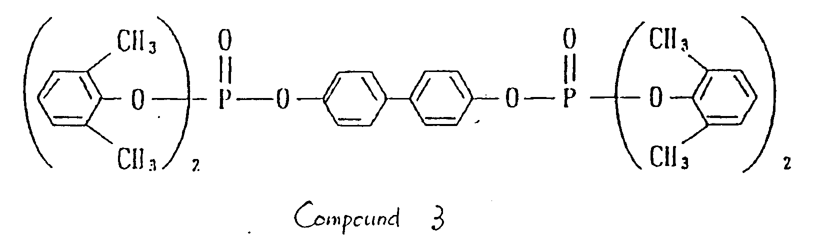

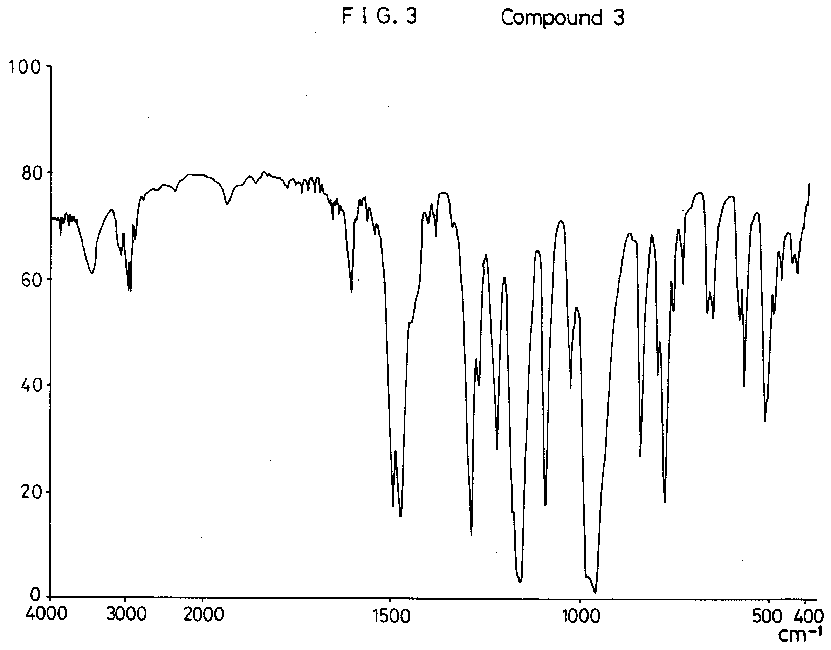

IR spectrum of this compound is shown in Fig. 3.
- NMR (CDCl₃) δ:: 2.42(24H,s), 7.17(12H,s), 7.19(8H,s)

### Example 8

Each 10 parts of the flame-retardants obtained in Examples 5 to 7 were added to a resin comprising 60 parts of poly(2,6-dimethyl-1,4-phenylene)oxide and 40 parts of rubber modified high-impact polystyrene, stirred and subjected to an extruder at 300 °C to obtain a compounding pellet. This pellet was put in an injection molder at 290 to 300 °C to give a test piece for measuring its flame retardance, susceptibility to discoloration, heat deformation temperature, Izod impact strength and tensile strength. Table 3 shows these results as well as those of Comparative example 3 to be described next.

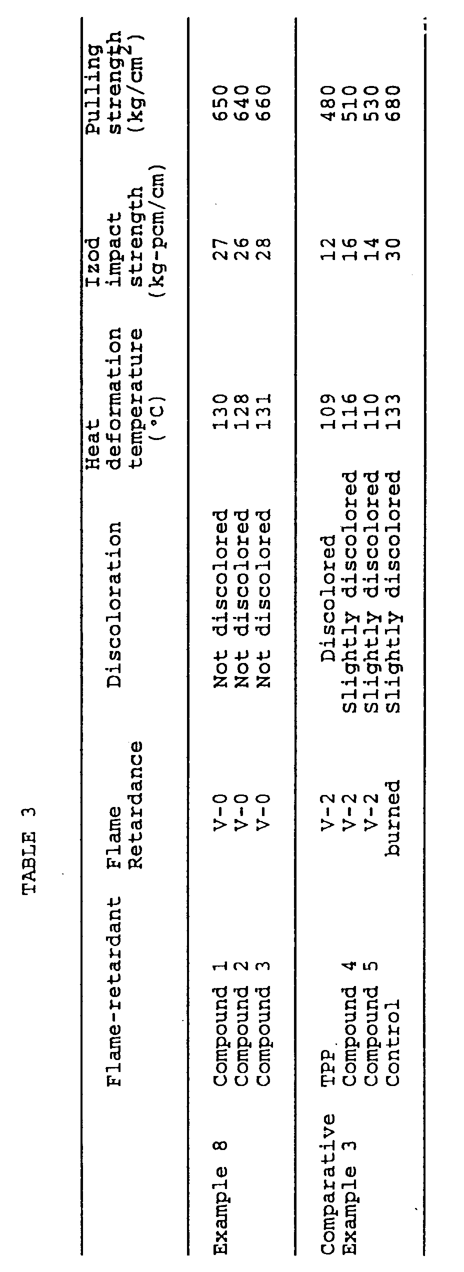

### Comparative example 3

A test piece was obtained in the same manner as Example 8, except using, as a flame-retardant, TPP and compounds of the following formulae:

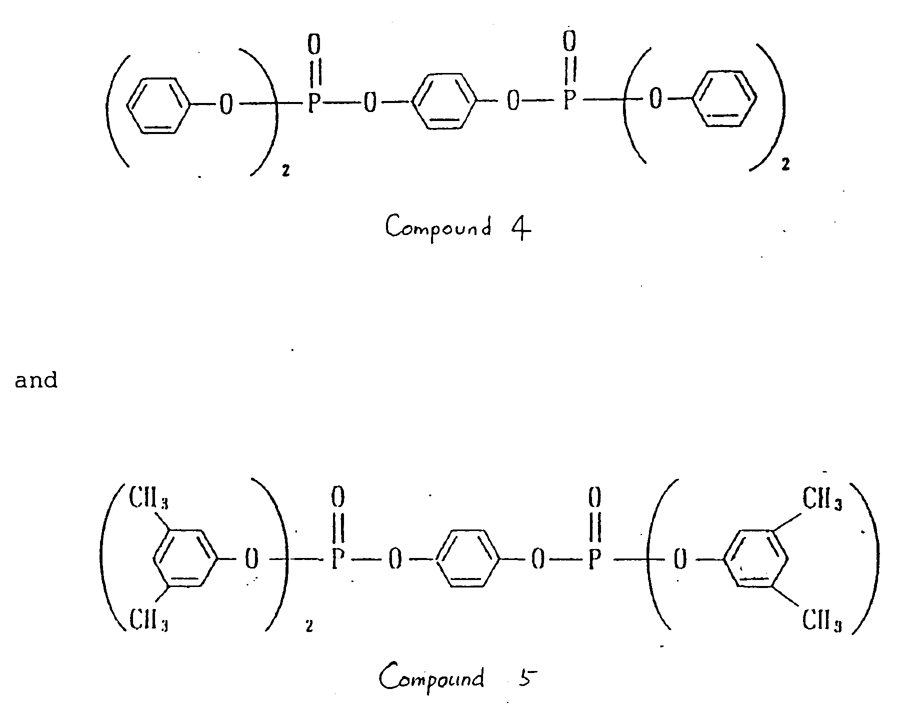

### Example 9

Each 10 parts of the flame-retardant obtained in Examples 5 to 7 were added to 100 parts of a polycarbonate resin, stirred and subjected to an extruder kept at 280 °C to give a compounding pellet. This pellet was put in an injection molder at 260 to 280 °C to obtain a test piece for measuring its flame retardance, susceptibility to discoloration, heat deformation temperature, Izod impact strength and tensile strength in the same manner as Example 8. Table 4 shows these results as well as those of Comparative example 4 to be described next.

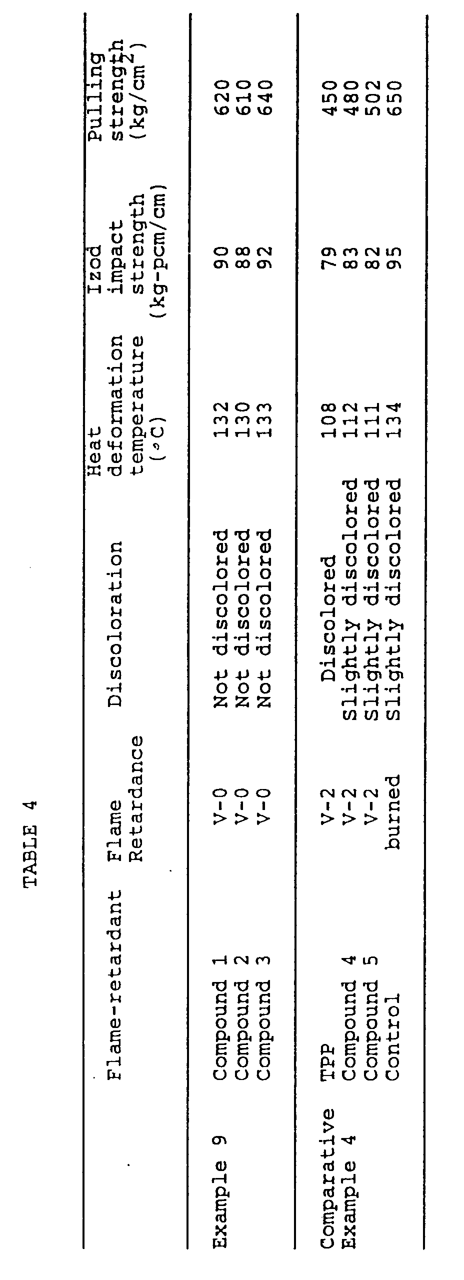

### Comparative example 4

Comparative example 4 was carried out in the same manner as Example 9, except using TPP with Compounds 4 and 5 each as a flame-retardant to obtain a test piece.

### Example 10

Each 10 parts of the flame-retardants obtained in Examples 5 to 7 were added to 100 parts of a polyphenylene sulfide resin, stirred and subjected to an extruder kept at 350 °C to give a compounding pellet. This pellet was put in an injection molder at 330 to 350 °C to obtain a test piece for measuring its flame retardance, susceptibility to discoloration, heat deformation temperature, Izod impact strength and tensile strength. Table 5 shows these results as well as those of Comparative example 5 to be described next.

**TABLE 5**

| | Flame-retardant | Flame Retardance | Discoloration | Melt Flow Rate (g/10min) |
|---|---|---|---|---|
| Example 10 | Compound 1 | V-0 | Not discolored | 24 |
| | Compound 2 | V-0 | Not discolored | 35 |
| | Compound 3 | V-0 | Not discolored | 18 |
| Comparative Example 5 | TPP | Collapse of a compounding pellet prevented a preparation of a test piece. | | |
| | Compound 4 | | | |
| | Compound 5 | | | |
| | Control | Burned | | 12 |

### Comparative example 5

Comparative example 5 was carried out in the same manner as Example 10, except using TPP together with Compounds 4 and 5 as a flame-retardant to obtain a test piece.

### Flame retardance

Flame retardance of the test pieces was evaluated by a test method of UL-94, and classified into four stages of V-0, V-1, V-2 and HB.

### Susceptibility to discoloration

Discoloration of the test pieces was evaluated by visual test.

### Heat deformation temperature

Heat deformation temperature was measured under a load of 18.6 kg/cm² in compliance with ASTM D-648.

### Tensile strength

Pulling strength was measured in compliance with ASTM D-638.

### Melt flow rate

Melt flow rate was measured at 330 °C under a load of 5 kg in a manipulation A in compliance with JIS K7210.

As have been described above, according to the present invention, a thermally stable aromatic diphosphate can economically be prepared as crystalline powders of high purity, more than 98 %. The aromatic diphosphate is so superior in workability for preparing the resin composition that the aromatic diphosphate when added to various thermoplastic resins (except polyester) or thermosetting resins can impart flame retardance to these resins. Further, the aromatic diphosphate exhibits a good thermal stability and anti-oxidant action, and is less pyrolyzed at a molding process of the resin, hence causing the resin little coloration and deterioration. As a result, the diphosphate hardly deteriorates the physical properties of the resins. Moreover, the aromatic phosphate gives plasticity even to engineering plastics and super-engineering plastics, which are poor in processability, and hence can remarkably improve moldability of these plastics.

## Claims

1. An aromatic diphosphate of the formula (I): 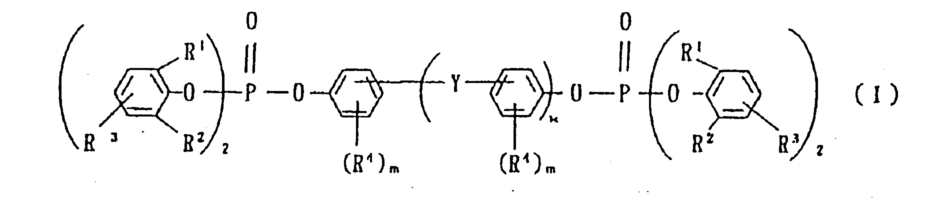 wherein R¹ and R² are, the same or different, a lower alkyl group, R³ is a hydrogen atom or a lower alkyl group, R⁴ is a hydrogen atom or a lower alkyl, Y is a bonding arm, -CH₂-, -C(CH₃)₂-, -S-, -SO₂-, -CO-, -O- or -N=N-, k is 0 or 1 and m is an integer of 0 to 4, characterized by the form of a crystalline powder.

2. The aromatic diphosphate of claim 1 wherein both of R¹ and R² are a methyl group, both of R³ and R⁴ are a hydrogen atom, Y is a bonding arm, k is 0 or 1 and m is 1.

3. The aromatic diphosphate of claim 1 wherein the aromatic diphosphate is any one of

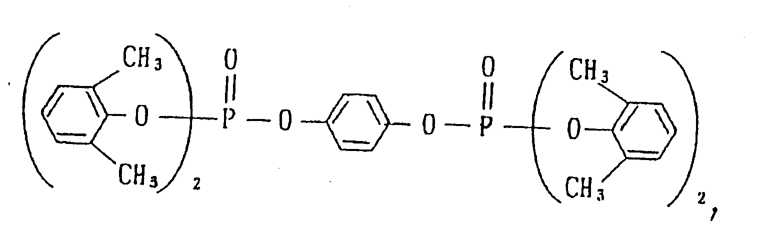

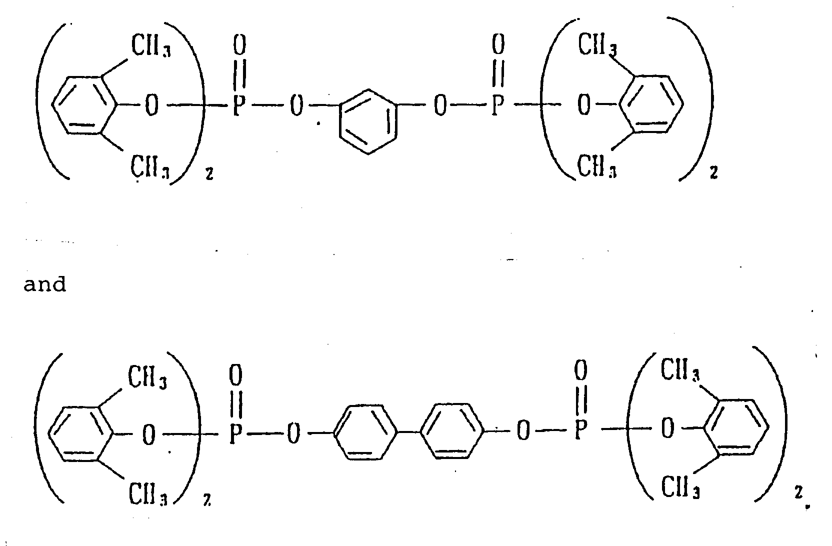

4. The aromatic diphosphate of claim 1 which is obtainable by reacting an aromatic monohydroxy compound of the formula (II): 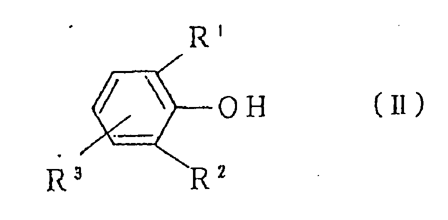 wherein R¹, R² and R³ have the same meanings as defined in claim 1,
with a phosphorus oxyhalide in the presence of a Lewis acid catalyst to produce a diarylphosphoro halodate of the formula (III): 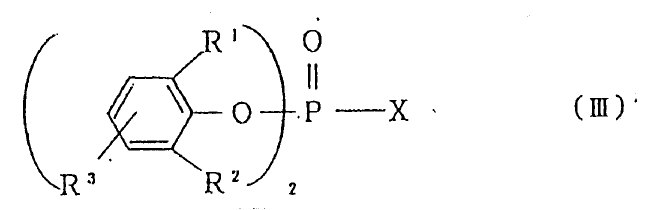 wherein R¹, R² and R³ are as defined above and X is a halogen atom,
and reacting the compound (III) with an aromatic dihydroxy compound of the formula (IV): 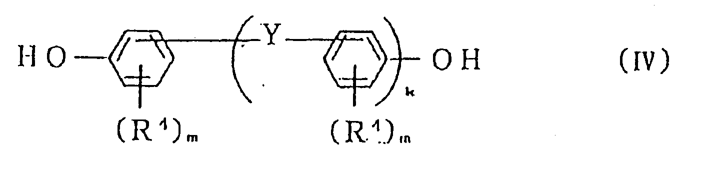 wherein R⁴, Y, k and m have the same meanings as defined in claim 1, in the presence of a Lewis acid catalyst.

5. The aromatic diphosphate of claim 4 wherein the Lewis acid catalyst used is magnesium chloride.

6. A flame retardant and thermally stable composition comprising the aromatic diphosphate of the formula (I) in claim 1 and a thermoplastic or thermosetting resin.

7. The flame retardant and thermally stable composition of claim 6 wherein the aromatic diphosphate is used in an amount of 0.1 - 100 parts by weight to 100 parts by weight of the thermoplastic or thermosetting resin.

8. A process for producing the aromatic diphosphate as defined in claim 1 of the formula (I) 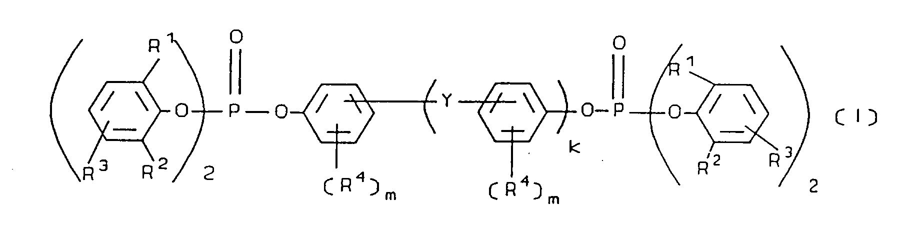 wherein R¹ to R⁴, y, k and m are defined as in claim 1, comprising: reacting an aromatic monohydroxy compound of formula (II): 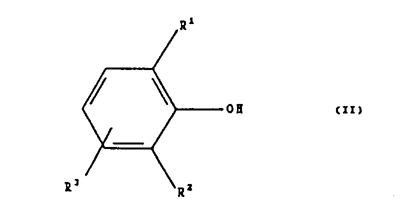 wherein R¹, R² and R³ have the same meaning as defined in claim 1,
with a phosphorus oxyhalide in the presence of a Lewis acid catalyst to produce a diarylphosphoro halidate of the formula (III): 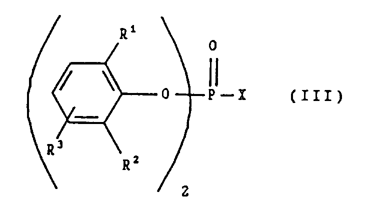 wherein R¹, R² and R³ have the same meaning as defined in claim 1, and X is a halogen atom,
and reacting the compound of formula (III) with an aromatic dihydroxy compound of the formula (IV): 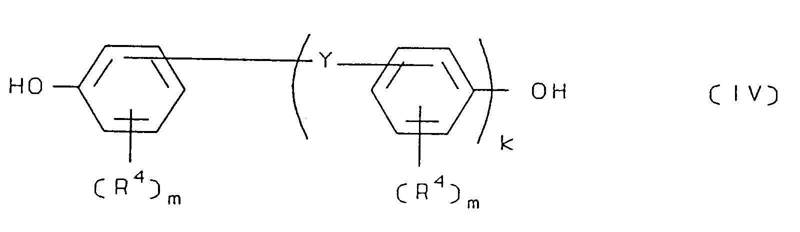 wherein R⁴, Y , k and m have the same meanings as defined in claim 1 in the presence of a Lewis acid catalyst.

9. The process of claim 8, wherein the aromatic monohydroxy compound of formula (II) is a member selected from the group consisting of 2,6-xylenol and 2,4,6-trimethylphenol.

10. The process of claim 9, wherein the aromatic monohydroxy compound is 2,6-xylenol.

11. The process of claim 8, wherein the aromatic dihydroxy compound of formula (IV) is a member selected from the group consisting of hydroquinone, resorcinol, pyrocatechol, 4,4'-biphenol, 2,2',6,6'-tetramethyl-4,4'-biphenol, bisphenol A, bisphenol S and bisphenol F.

12. The process of claim 11, wherein the aromatic dihydroxy compound of formula (IV) is a member selected from the group consisting of hydroquinone, resorcinol and 4,4'-biphenol.

13. The process of claim 8, wherein said Lewis acid is selected from group consisting of aluminum chloride, magnesium chloride, titanium tetrachloride, antimony pentachloride, zinc chloride, tin chloride, and mixtures thereof.

14. The process of claim 13, wherein said Lewis acid is magnesium chloride.

15. The process of claim 8, wherein the phosphorus oxyhalide is a member selected from the group consisting of phosphorus oxychloride and phosphorus oxybromide.

16. The process of claim 15, wherein the phosphorus oxyhalide is phosphorus oxychloride.

17. The process of claim 8, wherein the aromatic monohydroxy compound of formula (II) is a member selected from the group consisting of 2,6-xylenol and 2,4,6-trimethylphenol; the aromatic dihydroxy compound of formula (IV) is a member selected from the group consisting of hydroquinone, resorcinol, pyrocatechol, 4,4'-biphenol, 2,2',6,6'-tetramethyl-4,4'-biphenol, bisphenol A, bisphenol S and bisphenol F;the Lewis acid is selected from group consisting of aluminum chloride, magnesium chloride, titanium tetrachloride, antimony pentachloride, zinc chloride, tin chloride, and mixtures thereof; and the phosphorus oxyhalide is a member selected from the group consisting of phosphorus oxychloride and phosphorus oxybromide.

18. The process of claim 17, wherein the aromatic monohydroxy compound is 2,6-xylenol; the aromatic dihydroxy compound of formula (IV) is a member selected from the group consisting of hydroquinone, resorcinol and 4,4'-biphenol; the Lewis acid is magnesium chloride; and the phosphorus oxyhalide is phosphorus oxychloride.

19. The process of claim 8, wherein the reaction of the aromatic dihydroxy compound with the diarylphosphoro halidate is carried out in the presence of an amine.

20. The process of claim 19, wherein the amine comprises trimethylamine or tributylamine.

21. The process of claim 8, wherein a ratio of phosphorus oxyhalide to compound of formula (II) comprises at least 0.5 mole equivalent amount.

22. The process of claim 21, wherein 1 - 1.2 mole of phosphorus oxyhalide is used per mole of compound of formula (II).

## Patentansprüche

1. Aromatisches Diphosphat der Formel (I): 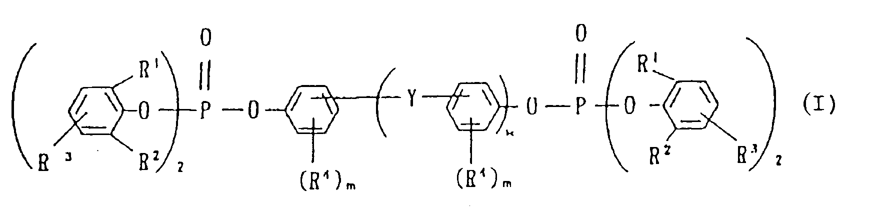 worin R¹ und R², die gleich oder verschieden sind, für eine Niedrigalkylgruppe stehen, R³ für ein Wasserstoffatom oder eine Niedrigalkylgruppe steht, R⁴ für ein Wasserstoffatom oder Niedrigalkyl steht, Y ein Bindungsarm, -CH₂-, -C(CH₃)₂-, -S-, -SO₂-, -CO-, -O- oder -N=N- ist, k den Wert 0 oder 1 hat und m eine ganze Zahl von 0 bis 4 ist, gekennzeichnet durch die Form eines kristallinen Pulvers.

2. Aromatisches Diphosphat nach Anspruch 1, dadurch **gekennzeichnet,** daß sowohl R¹ als auch R² für eine Methylgruppe stehen, sowohl R³ und R⁴ für ein Wasserstoffatom stehen, Y einen Bindungsarm darstellt, k den Wert 0 oder 1 hat und m den Wert 1 hat.

3. Aromatisches Diphosphat nach Anspruch 1, dadurch **gekennzeichnet,** daß das aromatische Diphosphat durch eine der folgenden Formeln 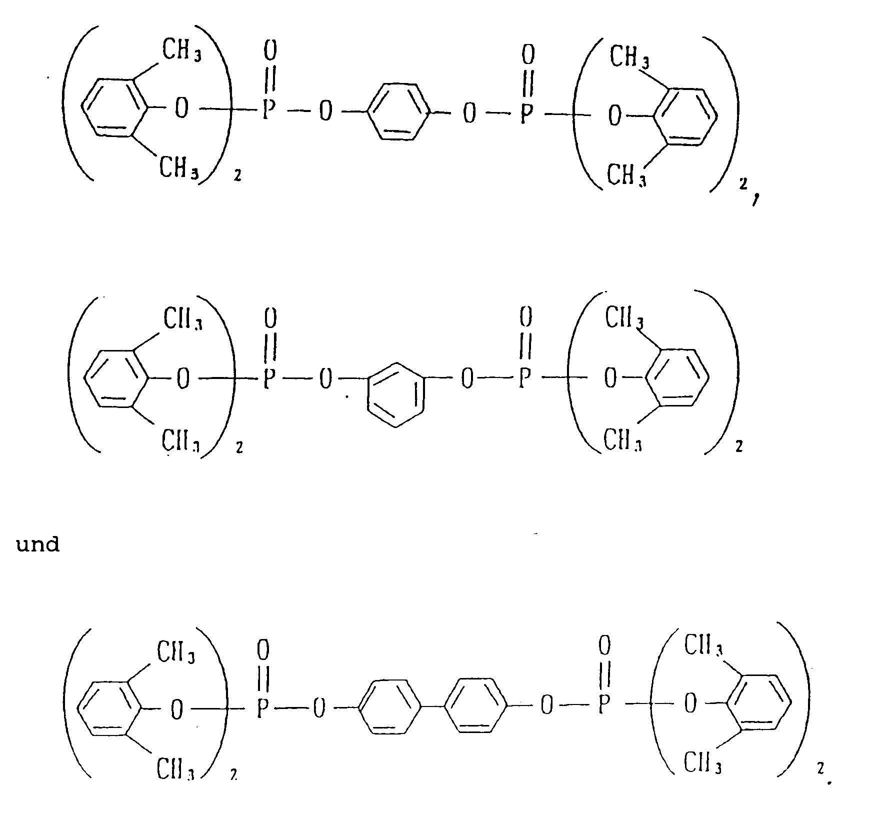 angegeben wird.

4. Aromatisches Diphosphat nach Anspruch 1, dadurch **gekennzeichnet,** daß es dadurch erhältlich ist, daß eine aromatische Monohydroxyverbindung der Formel (II): 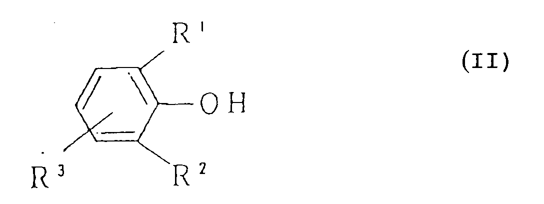 worin R¹, R² und R³ wie in Anspruch 1 definiert sind, mit einem Phosphoroxyhalogenid in Gegenwart eines Lewis-Säure-Katalysators zur Herstellung eines Diarylphosphorhalodats der Formel (III): 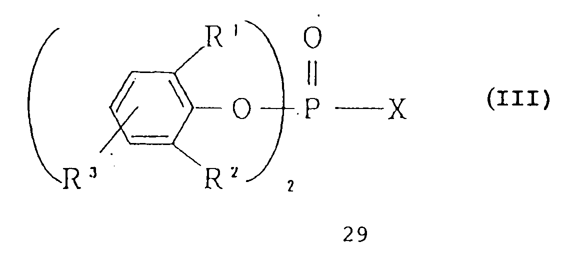 worin R¹, R² und R³ wie vorstehend definiert sind und X ein Halogenatom bedeutet, umgesetzt wird und daß die Verbindung (III) mit einer aromatischen Dihydroxyverbindung der Formel (IV): 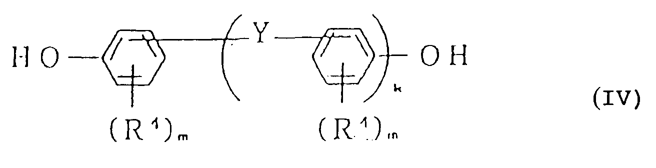 worin R⁴, Y, k und m wie in Anspruch 1 definiert sind, in Gegenwart eines Lewis-Säure-Katalysators umgesetzt wird.

5. Aromatisches Diphosphat nach Anspruch 4, dadurch **gekennzeichnet,** daß der verwendete Lewis-Säure-Katalysator Magnesiumchlorid ist.

6. Flammverzögernde und thermisch stabile Masse, umfassend das aromatische Diphosphat der Formel (I) nach Anspruch 1 und ein thermoplastisches oder wärmehärtendes Harz.

7. Flammverzögernde und thermisch stabile Masse nach Anspruch 6, dadurch **gekennzeichnet,** daß das aromatische Diphosphat in einer Menge von 0,1 bis 100 Gew.-Teilen pro 100 Gew.-Teile thermoplastisches oder wärmehärtendes Harz verwendet worden ist.

8. Verfahren zur Herstellung des aromatischen Diphosphats nach Anspruch 1 der Formel (I) 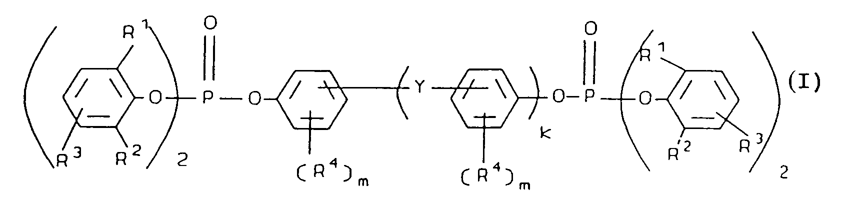 worin R¹ bis R⁴, y, k und m wie in Anspruch 1 definiert sind, umfassend: Umsetzung einer aromatischen Monohydroxyverbindung der Formel (II): 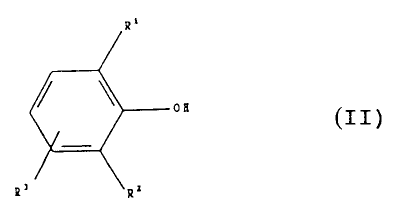 worin R¹, R² und R³ wie in Anspruch 1 definiert sind, mit einem Phosphoroxyhalogenid in Gegenwart eines Lewis-Säure-Katalysators zur Herstellung eines Diarylphosphorhalidats der Formel (III): 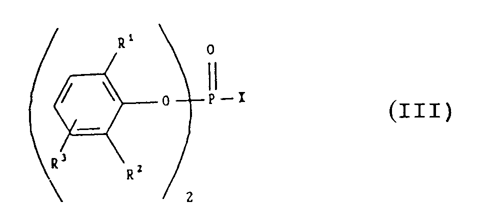 worin R¹, R² und R³ wie in Anspruch 1 definiert sind, und X ein Halogenatom bedeutet,
und Umsetzung der Verbindung der Formel (III) mit einer aromatischen Dihydroxyverbindung der Formel (IV): 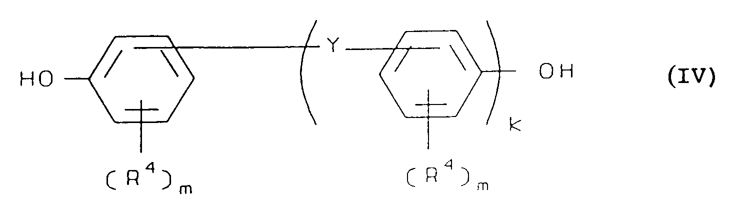 worin R⁴, Y, k und m wie in Anspruch 1 definiert sind, in Gegenwart eines Lewis-Säure-Katalysators.

9. Verfahren nach Anspruch 8, dadurch **gekennzeichnet,** daß die aromatische Monohydroxyverbindung der Formel (II) eine Verbindung, ausgewählt aus der Gruppe bestehend aus 2,6-Xylenol und 2,4,6-Trimethylphenol, ist.

10. Verfahren nach Anspruch 9, dadurch **gekennzeichnet,** daß die aromatische Monohydroxyverbindung 2,6-Xylenol ist.

11. Verfahren nach Anspruch 8, dadurch **gekennzeichnet,** daß die aromatische Dihydroxyverbindung der Formel (IV) eine Verbindung, ausgewählt aus der Gruppe bestehend aus Hydrochinon, Resorcin, Brenzcatechin, 4,4'-Biphenol, 2,2',6,6'-Tetramethyl-4,4'-biphenol, Bisphenol A, Bisphenol S und Bisphenol F, ist.

12. Verfahren nach Anspruch 11, dadurch **gekennzeichnet,** daß die aromatische Dihydroxyverbindung der Formel (IV) eine Verbindung, ausgewählt aus der Gruppe bestehend aus Hydrochinon, Resorcin und 4,4'-Biphenol, ist.

13. Verfahren nach Anspruch 8, dadurch **gekennzeichnet,** daß die Lewis-Säure aus der Gruppe, bestehend aus Aluminiumchlorid, Magnesiumchlorid, Titantetrachlorid, Antimonpentachlorid, Zinkchlorid, Zinnchlorid und Gemischen davon, ausgewählt ist.

14. Verfahren nach Anspruch 13, dadurch **gekennzeichnet,** daß die Lewis-Säure Magnesiumchlorid ist.

15. Verfahren nach Anspruch 8, dadurch **gekennzeichnet,** daß das Phosphoroxyhalogenid eine Verbindung, ausgewählt aus der Gruppe bestehend aus Phosphoroxychlorid und Phosphoroxybromid, ist.

16. Verfahren nach Anspruch 15, dadurch **gekennzeichnet,** daß das Phosphoroxyhalogenid Phoshoroxychlorid ist.

17. Verfahren nach Anspruch 8, dadurch **gekennzeichnet,** daß die aromatische Monohydroxyverbindung der Formel (II) eine Verbindung, ausgewählt aus der Gruppe bestehend aus 2,6-Xylenol und 2,4,6-Trimethylphenol, ist, daß die aromatische Dihydroxyverbindung der Formel (IV) eine Verbindung, ausgewählt aus der Gruppe bestehend aus Hydrochinon, Resorcin, Brenzcatechin, 4,4'-Biphenol, 2,2',6,6'-Tetramethyl-4,4'-biphenol, Bisphenol A, Bisphenol S und Bisphenol F, ist, daß die Lewis-Säure aus der Gruppe, bestehend aus Aluminiumchlorid, Magnesiumchlorid, Titantetrachlorid, Antimonpentachlorid, Zinkchlorid, Zinnchlorid und Gemischen davon, ausgewählt ist, und daß das Phosphoroxyhalogenid eine Verbindung, ausgewählt aus der Gruppe bestehend aus Phosphoroxychlorid und Phosphoroxybromid, ist.

18. Verfahren nach Anspruch 17, dadurch **gekennzeichnet,** daß die aromatische Monohydroxyverbindung 2,6-Xylenol ist, daß die aromatische Dihydroxyverbindung der Formel (IV) eine Verbindung, ausgewählt aus der Gruppe bestehend aus Hydrochinon, Resorcin und 4,4'-Biphenol, ist, daß die Lewis-Säure Magnesiumchlorid ist und daß das Phosphoroxyhalogenid Phosphoroxychlorid ist.

19. Verfahren nach Anspruch 8, dadurch **gekennzeichnet,** daß die Umsetzung der aromatischen Dihydroxyverbindung mit dem Diarylphosphorhalidat in Gegenwart eines Amins durchgeführt wird.

20. Verfahren nach Anspruch 19, dadurch **gekennzeichnet,** daß das Amin Trimethylamin oder Tributylamin umfaßt.

21. Verfahren nach Anspruch 8, dadurch **gekennzeichnet,** daß das Verhältnis von Phosphoroxyhalogenid zu der Verbindung der Formel (II) mindestens eine äquivalente Menge von 0,5 mol umfaßt.

22. Verfahren nach Anspruch 21, dadurch **gekennzeichnet,** daß 1 bis 1,2 mol Phosphoroxyhalogenid pro Mol der Verbindung der Formel (II) eingesetzt werden.

## Revendications

1. Diphosphate aromatique de formule (I): 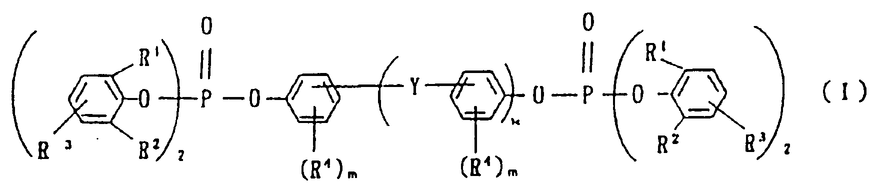 dans laquelle R¹ et R² sont identiques ou différents, et représentent un groupe alkyle inférieur, R³ représente un atome d'hydrogène, ou un groupe alkyle inférieur, R⁴ est un atome d'hydrogène ou un groupe alkyle inférieur, Y est un bras de liaison -CH₂-, -C(CH₃)₂-, -S-, SO₂-, -CO-, -O-, ou -N=N-, k est égal à 0 ou à 1, et m est un entier variant de 0 à 4, caractérisé en ce qu'il est sous la forme d'une poudre cristallisée.

2. Diphosphate aromatique selon la revendication 1, dans lequel R¹ et R² sont tous deux un groupe méthyle, R³ et R⁴ sont tous deux un atome d'hydrogène, Y est un bras de liaison, k est égal à 0 ou à 1, et m est égal à 1.

3. Diphosphate aromatique selon la revendication 1, où le diphosphate aromatique est l'un quelconque de

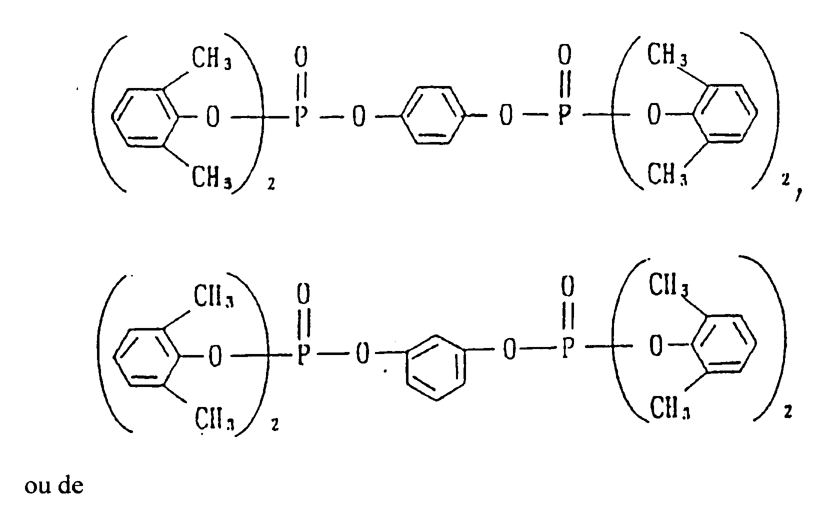

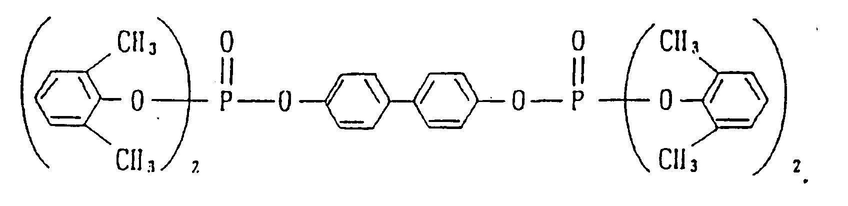

4. Diphosphate aromatique selon la revendication 1, qui peut être obtenu par réaction d'un composé monohydroxy aromatique de formule (II) : 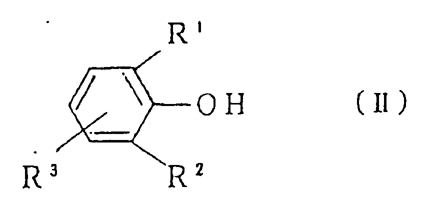 dans laquelle R¹, R², et R³ sont tels que définis dans la revendication 1, avec un oxyhalogénure de phosphore en présence d'un catalyseur acide de Lewis, pour donner un diaryle halodate de formule (III) : 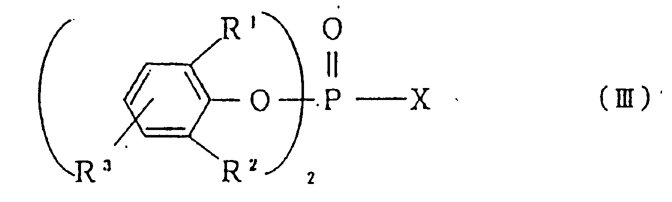 dans laquelle R¹, R², et R³, sont tels que définis plus haut, et X est un atome d'halogène,
et par réaction du composé (III) avec un composé dihydroxy aromatique de formule (IV) : 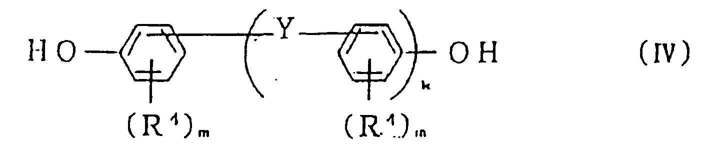 dans laquelle R⁴, Y, k, et m sont tels que d »finis dans la revendication 1, en présence d'un catalyseur acide de Lewis.

5. Diphosphate aromatique selon la revendication 4, dans lequel le catalyseur acide de Lewis utilisé est le chlorure de magnésium.

6. Composition retardatrice de flamme et thermiquement stable, comprenant le diphosphate aromatique de formule (I) selon la revendication 1, et une résine thermoplastique ou thermodurcissable.

7. Composition retardatrice de flamme et thermiquement stable selon la revendication 6, dans laquelle le diphosphate aromatique est utilisé en quantité comprise entre 0,1 et 100 parties en poids, pour 100 parties en poids, de résine thermoplastique ou thermodurcissable.

8. Procédé de production du diphosphate aromatique selon la revendication 1, de formule (I) : 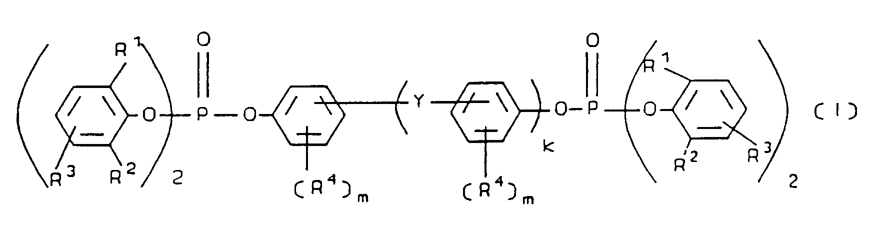 dans laquelle R¹, R², R³, et R⁴, Y, k, et m, sont tels que définis dans la revendication 1, comprenant la réaction d'un composé monohydroxy aromatique de formule (III) : 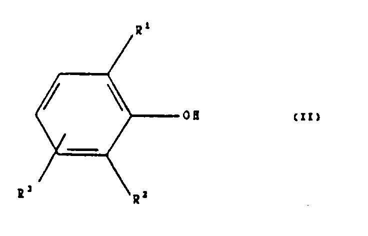 dans laquelle R¹, R², et R³, sont tels que définis dans la revendication 1, avec un oxyhalogénure de phosphore en présence d'un catalyseur acide de Lewis, pour donner un diarylphosphorohalidate de formule (III) : 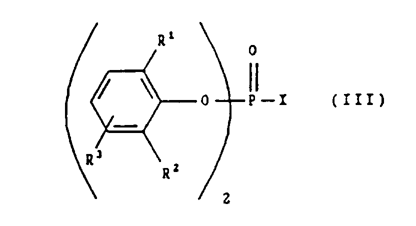 dans laquelle R¹, R², et R³, sont tels que définis dans la revendication 1, et X est un atome d'halogène,
et la réaction du composé de formule (III) avec un composé dihydroxy aromatique de formule (IV) : 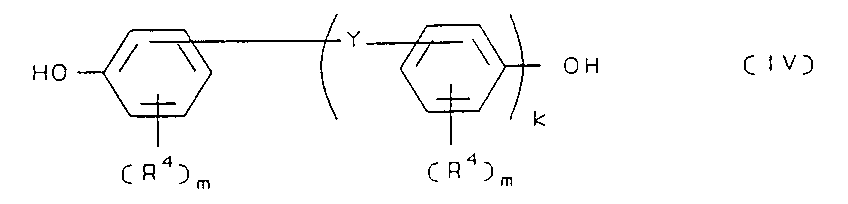 dans laquelle R⁴, Y, k, et m, sont tels que définis dans la revendication 1, en présence d'un catalyseur acide de Lewis.

9. Procédé selon la revendication 8, dans lequel le composé monohydroxy aromatique de formule (II) est un membre choisi au sein du groupe constitué par le 2,6-xylénol, et le 2,4,6-triméthylphénol.

10. Procédé selon la revendication 9, dans lequel le composé monohydroxy aromatique est le 2,6-xylénol.

11. Procédé selon la revendication 8, dans lequel le composé dihydroxy aromatique de formule (IV) est un membre choisi au sein du groupe constitué par l'hydroquinone, le résorcinol, le pyrocatéchol, le 4,4'-biphénol, le 2,2',6,6'-tétraméthyl-4,4'-biphénol, le bisphénol A, le bisphénol S, et le bisphénol F.

12. Procédé selon la revendication 11, dans lequel le composé dihydroxy aromatique de formule (IV) est un membre choisi au sein du groupe constitué par l'hydroquinone, le résorcinol, et le 4,4'-biphénol.

13. Procédé selon la revendication 8, dans lequel ledit acide de Lewis est choisi au sein du groupe constitué par le chlorure d'aluminium, le chlorure de magnésium, le tétrachlorure de titane, le pentachlorure d'antimoine, le chlorure de zinc, le chlorure d'étain, et les mélanges de ceux-ci.

14. Procédé selon la revendication 13, dans lequel ledit acide de Lewis est le chlorure de magnésium.

15. Procédé selon la revendication 8, dans lequel l'oxyhalogénure de phosphore est un membre choisi au sein du groupe constitué par l'oxychlorure de phosphore, et l'oxybromure de phosphore.

16. Procédé selon la revendication 15, dans lequel l'oxyhalogénure de phosphore est l'oxychlorure de phosphore.

17. Procédé selon la revendication 8, dans lequel le composé monohydroxy aromatique de formule (II) est un membre choisi au sein du groupe constitué par le 2,3-xylénol, et le 2,4,6-triméthylphénol ; le composé dihydroxy aromatique de formule (IV) est un membre choisi au sein du groupe constitué par l'hydroquinone, le résorcinol, le pyrocatéchol, le 4,4'-biphénol, le 2,2',6,6'-tétraméthyl-4,4'-biphénol, le bisphénol A, le bisphénol S, et le bisphénol F ; l'acide de Lewis est choisi au sein du groupe constitué par le chlorure d'aluminium, le chlorure de magnésium, le tétrachlorure de titane, le pentachlorure d'antimoine, le chlorure de zinc, le chlorure d'étain, et les mélanges de ceux-ci; et l'oxyhalogénure de phosphore est un membre choisi au sein du groupe constitué par l'oxychlorure de phosphore, et l'oxybromure de phosphore.

18. Procédé selon la revendication 17, dans lequel le composé monohydroxy aromatique est le 2,6-xylénol ; le composé dihydroxy aromatique de formule (IV) est un membre choisi au sein du groupe constitué par l'hydroquinone, le résorcinol, et le 4,4'-biphénol ; l'acide de Lewis est le chlorure de magnésium ; et l'oxyhalogénure de phosphore est l'oxychlorure de phosphore.

19. Procédé selon la revendication 8, dans lequel la réaction du composé dihydroxy aromatique avec le diarylphosphorohalidate, est effectuée en présence d'une amine.

20. Procédé selon la revendication 19, dans laquelle l'amine comprend la triméthylamine ou la tributylamine.

21. Procédé selon la revendication 8, dans lequel le ratio entre l'oxyhalogénure de phosphore et le composé de formule (II) est d'au moins 0,5 en quantité d'équivalent molaire.

22. Procédé selon la revendication 21, dans lequel 1 à 1,2 mole d'oxyhalogénure de phosphore est utilisée, par mole de composé de formule (II).
